# EUROPÄISCHE PATENTSCHRIFT

(11) **EP 0 433 566 B1**
(45) Veröffentlichungstag und Bekanntmachung des Hinweises auf die Patenterteilung: **12.07.1995**
(21) Anmeldenummer: 90117844.2
(22) Anmeldetag: 17.09.1990
(51) Int. Cl.: B60H 1/00, G05G 7/02

(54) **Stelleinrichtung für Regelglieder**
Actuator for a controlling member
Dispositif d'actionnement d'un organe de réglage

(30) Priorität: 21.12.1989 DE 3942208
(43) Veröffentlichungstag der Anmeldung: 26.06.1991
(73) Patentinhaber: Max Kammerer GmbH, 61440 Oberursel (DE)
(72) Erfinder: Schiller, Werner, Dipl.-Ing., D-6106 Erzhausen (DE); Modenbach, Thomas, D-6000 Frankfurt a. Main 50 (DE)
(74) Vertreter: Eyer, Eckhardt Philipp, Dipl.-Ing.

(56) Entgegenhaltungen:
- EP-A- 0 149 397
- FR-A- 2 423 815
- FR-A- 2 453 742
- US-A- 1 724 990

## Beschreibung

Die Erfindung geht aus von einer Stelleinrichtung gemäß dem Oberbegriff des Patentanspruches 1.

Bei einer bekannten Stelleinrichtung dieser Art besteht das Kraftübertragungsglied aus einem Bowdenzug in Verbindung mit einem in seinem Eckpunkt drehbar gelagerten und an seinem einen Ende den Mitnehmerzapfen tragenden Kniehebel, an dessen anderem, freien Ende der Bowdenzug angehängt ist.

Die bekannte Stellgliedeinrichtung weist eine Reihe wesentlicher Nachteile auf. Einer dieser Nachteile besteht darin, daß sich der in der Kulisse geführte Mitnehmerzapfen aufgrund der drehbaren Lagerung des Kniehebels bei Betätigung der Kulissenscheibe eine kreisbogenförmige Bewegung ausführt.

Hieraus ergeben sich in den Fällen, in denen aus Platzgründen der den Bowdenzug tragende Kraftarm des Kniehebels kurz gehalten werden muß, außerordentlich ungünstige Winkel- und damit Kraftübertragungsverhältnisse, die hohe Reibungsverluste im Gefolge haben und bis zum Blockieren der Stelleinrichtung führen können. Ein weiterer Nachteil besteht auch darin, daß in den Fällen, in denen aus konstruktiven Gründen mehrere Umlenkungen in der Kraftübertragung zwischen Stellglied und Regelglied vorgesehen werden müssen, im Bowdenzug erhebliche Reibungsverluste auftreten, die nur durch Vergrößerung des Bowdenzugspiels verringert werden können. Dies ergibt jedoch wiederum einen unerwünschten Totgang in der Stelleinrichtung zwischen Vorwärts- und Rückwärtsbetätigung.

Der vorliegenden Erfindung liegt als Aufgabe die Schaffung einer Stelleinrichtung der beschriebenen Art zugrunde, mit deren Hilfe die Stellkraft ohne wesentliche Reibungs- und Umlenkungsverluste vom Stellglied auf das Regelglied übertragen werden kann.

Diese Aufgabe wird durch eine Stelleinrichtung mit den im Patentanspruch 1 wiedergegebenen Merkmalen erfüllt.

Durch die Verwendung eines Schiebers anstelle des bisher eingesetzten Kniehebels wird insbesondere eine absolut gradlinige Bewegung des Mitnehmerzapfens erreicht, wobei der angetriebene Schieber in jeder Stellung eine radiale, d.h. in bezug auf die Kraftübertragung optimale Lage zur Kulissenscheibe einnimmt. Der durch die Exzentrisität der Kulisse bestimmte Stellweg ist voll nutzbar bei Gewährleistung absoluter Linearität der Stell-Kennlinie. Der Platzbedarf ist im Verhältnis zu den bekannten Stelleinrichtungen gering. Es erlaubt schließlich die erfindungsgemäße Einrichtung die Anordnung und gleichzeitige Betätigung mehrerer Schieber.

In einer besonders vorteilhaften Ausführungsform der Erfindung ist anstelle eines einfachen Schiebers ein Zahnstangenantrieb vorgesehen, dessen Abtriebsritzel mittels einer flexiblen oder starren Welle über eine Kardaneinlenkung mit dem Regelglied verbunden ist. Es ergibt sich auf diese Weise die Möglichkeit, das Übersetzungsverhältnis und damit den Stellweg in weiten Grenzen frei zu wählen, wobei darüberhinaus durch die Wahl der Form des Abtriebsritzels bzw. der Lage des Zahnprofils an der Zahnstange die Abgansrichtung der Welle ohne Kraftverlust frei gewählt werden kann.

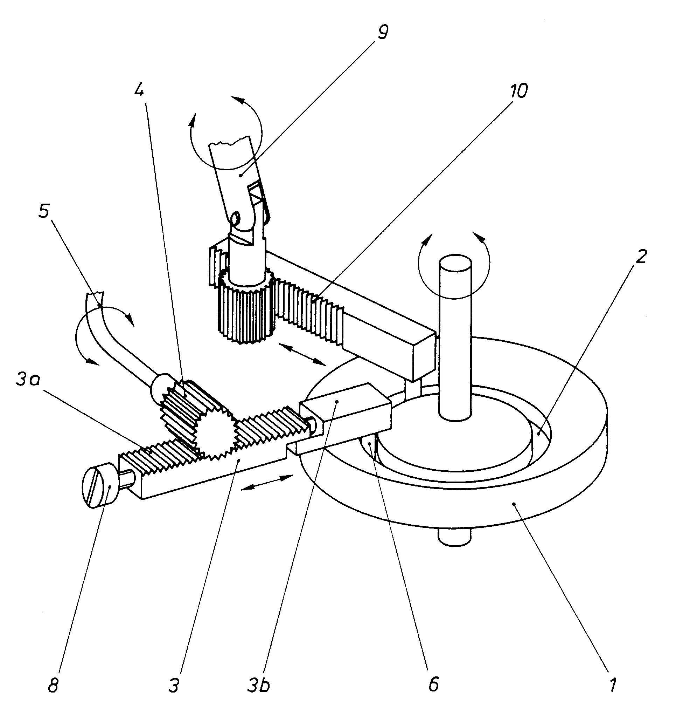

Weitere Vorteile und Ausführungsformen ergeben sich aus der nachfolgenden Beschreibung, in der die Erfindung anhand der beiliegenden Zeichnung beispielsweise erläutert ist.

Die in der Zeichnung wiedergegebene Stelleinrichtung besteht aus einer beispielsweise mittels Drehknopf drehbetätigten Kulissenscheibe 1 mit exzentrischer Kulisse 2 und einem im wesentlichen von einem Schieber gebildeten Kraftübertragungsglied, der im Falle der in der Zeichnung wiedergegebenen Ausführungsform von dem Zahnschieber 3 eines Zahnstangenantriebes gebildet ist, dessen Zahnritzel 4 über eine flexible Welle 5 mit dem Regelglied, beispielsweise einem Heizungs-, Lüftungs- oder Klimaregler verbunden ist. Der Zahnstangenschieber greift mit seinem Mitnehmerzapfen 6 in die Kulisse 2 ein.

Die Achse des Zahnritzels kann als Gelenkwelle (9) ausgebildet sein, wodurch eine erhöhte Flexibilität des Abtriebes erzielt wird, ebenso kann die Verzahnung (10) nach Lage und Form und Übersetzung beliebig gewählt werden, so daß auch unter beengten Raumverhältnissen allen praktischen Anforderungen nachgekommen werden kann.

Der Zahnschieber 3 besteht im Falle der dargestellten Ausführungsform aus zwei Teilen 3a und 3b, die in sich gegeneinander verschiebbar geführt und mittels einer Stellschraube 8 miteinander verbunden sind. Es wird auf diese Weise eine Längenjustierung und damit Feinabstimmung der Betätigung ermöglicht.

## Patentansprüche

1. Stelleinrichtung für Regelglieder, beispielsweise für Heizungs- oder Lüftungsregler von Kraftfahrzeugen mit einem von einer drehbetätigten Kulissenscheibe (1) mit exzentrischer Kulisse (2) gebildeten Stellglied und einem Stellelement als Kraftübertragungsglied, an dem ein in die Kulisse (2) eingreifender Mitnehmerzapfen (6) angeordnet ist, dadurch gekennzeichnet, daß das Stellelement von einem Zahnstangenantrieb aus einer den Mitnehmerzapfen (6) tragenden, längsverschieblich gelagerten Zahnstange (3) und einem mit dieser in Eingriff stehenden, auf einer Drehachse gelagerten Zahnritzel (4) gebildet ist, an dessen Drehachse fluchtend eine flexible oder starre, mit dem Regelglied verbundene Welle (5) befestigt ist.

2. Stelleinrichtung für Regelglieder nach Anspruch 1, dadurch gekennzeichnet, daß die Drehachse des Zahnritzels (4) von einer Gelenkwelle gebildet ist.

3. Stelleinrichtung für Regelglieder nach Anspruch 1 oder 2, dadurch gekennzeichnet, daß die Zahnstange (3) von zwei in sich verschiebbaren Teilen (3a, 3b) gebildet ist, die mittels einer Stellschraube (8) miteinander verbunden sind.

## Claims

1. Means for adjusting regulating members, for example for heating or ventilation regulators of motor vehicles, having an adjustment member, which is formed by a rotatably actuated sliding disc (1) provided with an eccentric slide member (2), and having an adjustment element as the power transmitting member, on which is disposed an attachment pin (6) which engages in the slide member (2), characterised in that the adjustment element is formed by a rack-and-pinion drive comprising a rack (3), which carries the attachment pin (6) and is longitudinally displaceably mounted, and a pinion (4), which is in engagement with said rack and is mounted on a rotatable axle, a flexible or rigid shaft (5), which is connected to the regulating member, being mounted in alignment on the rotatable axle of said pinion.

2. Means for adjusting regulating members according to claim 1, characterised in that the rotatable axle of the pinion (4) is formed by a universal jointed shaft.

3. Means for adjusting regulating members according to claim 1 or 2, characterised in that the rack (3) is formed from two portions (3a, 3b), which are displaceable in one another and are interconnected by means of an adjusting screw (8).

## Revendications

1. Dispositif de commande pour organes de réglage, par exemple pour des commandes de chauffage ou d'aération de véhicules automobiles, comprenant un organe de commande constitué par un disque à coulisse (1) comportant une coulisse excentrée (2) et actionné en rotation, et un élément de commande servant d'organe de transmission de force, sur lequel est disposée une broche d'entraînement (6) qui s'engage dans la coulisse (2), caractérisé en ce que l'élément de commande est constitué par un mécanisme à crémaillère se composant d'une crémaillère (3) qui porte la broche d'entraînement (6) et qui est montée de façon à pouvoir se déplacer longitudinalement, et d'un pignon (4) qui est monté sur un axe de rotation, est en prise avec ladite crémaillère et à l'axe de rotation duquel est fixé, dans l'alignement, un arbre flexible ou rigide (5) qui est relié à l'organe de réglage.

2. Dispositif de commande pour organes de réglage selon la revendication 1, caractérisé en ce que l'axe de rotation du pignon (4) est constitué par un arbre articulé.

3. Dispositif de commande pour organes de réglage selon la revendication 1 ou 2, caractérisé en ce que la crémaillère (3) est formée de deux parties (3a, 3b) mobiles individuellement qui sont raccordées l'une à l'autre au moyen d'une vis de réglage (8).
